# EUROPEAN PATENT APPLICATION

(11) **EP 4 644 003 A1**
(43) Date of publication of application: **05.11.2025**
(21) Application number: 23911416.8
(22) Date of filing: 14.11.2023
(51) Int. Cl.: B05B 3/10, B05B 15/00, C01D 3/06

(54) **FINE MIST GENERATION DEVICE**

(30) Priority: 26.12.2022 JP 2022209092
(71) Applicant: Takayasu, Masakatsu, Gushikawa-shi, Okinawa 904-2213 (JP)
(72) Inventor: Takayasu, Masakatsu, Gushikawa-shi, Okinawa 904-2213 (JP)
(74) Representative: Reich, Jochen
(86) International application number: PCT/JP2023/040895
(87) International publication number: WO 2024/142633

(57) **Abstract**

Provides a fine mist generator that can increase both the durability and generation efficiency of the device by increasing the rotational speed of the rotating body and the diameter of the disk shape to achieve large capacity of the fine mist while having a simple structure. [Technical Means] At the annular spherical portion 22B of the outer peripheral surface 22 of the rotating body 20 in the present application, each of a plurality of first magnets 41 (one example of the first magnetic bodies) are disposed with a substantially equal interval in the circumferential direction of the rotating body so that separation distances from the rotating axis C1 of the rotating body 20 to the first magnets 41 in the radial direction are substantially the same. A plurality of second magnets 42 (the second magnetic bodies) having the same polarity as the first magnets 41 are disposed with a substantially equal interval in a rotating direction of the rotating body 20, and the second magnets 42 are disposed to face each of the first magnets 41 respectively, so that magnetic force of the second magnets 42 can act on the first magnets 41 when the rotating body 20 is rotationally driven by the rotation driving unit 30 and the second magnets 42 approach the first magnets 41.

## Description

### TECHNICAL FIELD

The present invention relates to, for example, a fine mist generator capable of producing natural salt, etc. by making liquid such as seawater into a fine mist shape.

### BACKGROUND

As a device for making liquid such as seawater into fine mist shape (fine mist), the inventor of the present invention has proposed a technology, wherein a liquid such as seawater is supplied to the central portion of a rotating disk rotating at high speed, and the supplied liquid is diffused with a uniform film thickness along the surface of the rotating disk by centrifugal force (for example, refer to Patent Document 1). Further, in the proposed device, a stopper wall is erected on an outer peripheral edge of the rotating disk, and the above-described diffused liquid collides with the stopper wall and then is scattered to generate the fine mist. The natural salt is produced by evaporation of moisture due to the generation of the fine mist.

In addition, instead of the stopper wall disposed on the outer peripheral edge of the rotating disk, the inventor of the present invention has also proposed to dispose a bounce wall being closed to a predetermined gap space from the outer periphery of the rotating disk (for example, refer to Patent Document 2). In the proposed device, since the rotating disk and the bounce wall are disposed separately, the occurrence of bending stress or shearing force is suppressed in the device body during high-speed rotation. As a result, in the proposed device, damage to the device itself can be prevented, and the service life can be extended.

### PRIOR ART DOCUMENTS

### Patent Documents

Patent Document 1: JP 2008-12390 A
Patent Document 2: JP 2008-132445 A

### SUMMARY OF THE INVENTION

### Problems to be solved by the invention

As described above, the devices described in Patent Document 1 and Patent Document 2 both supply liquid to the central portion of the rotating disk, utilize the action of the centrifugal force, and make the liquid collide with an obstacle wall (stopper wall or bounce wall) disposed on the outside in the radial direction to generate the fine mist.

In this type of device, it can be said that there is a correlation between the generation amount of the fine mist and the strength of the centrifugal force, and it is necessary to rotate the rotating disk at a high speed in order to effectively obtain the action of the centrifugal force. Specifically, when the rotating disk is rotationally driven by a motor, during the high-speed rotation of its motor shaft and the rotating disk, it is necessary to stably support the rotating disk in order to prevent precession or shaft vibration. In addition, in order to increase the capacity of the fine mist, it is also necessary to increase the size of the rotating disk.

However, in the devices of Patent Document 1 and Patent Document 2, it is difficult to rotate in higher speed and increase the size of the rotating disk, and also difficult to further increase the supply amount of the liquid and increase the capacity of the fine mist. It can be said that there is still room in the devices of Patent Document 1 and Patent Document 2 for improvement.

In addition, the amount of supply per unit time of the liquid can be found to be substantially uniform from a macro perspective while slightly fluctuated from a micro perspective. When the rotational speed of the rotating disk reaches about 5,000~10,000 RPM, even if the slight fluctuation (unbalance) of the motor shaft may cause the variation. In this case, the bearing that supports the motor shaft may be damaged and broken, and as a result, there is a possibility that the motor itself may be damaged. When the motor is damaged, it takes time for replacement and repair, which might lower the generation efficiency of the fine mist. In addition, it is inefficient for being necessary to prepare a plurality of spare motors for the potential breakage of the motor.

Further, since the liquid is constantly supplied and operated in such device, it is desired that the number of components is few and the structure is simple. In this case, the maintenance management becomes easier, the durability of the device can be increased, and the long service life can be achieved.

The present invention has been made in view of the above circumstances, and provides a fine mist generator that can increase both the durability and generation efficiency of the device by increasing the rotational speed of the rotating body and the diameter of the disk shape to achieve large capacity of the fine mist while having a simple structure. Also, a fine mist generator is provided and capable of stably supporting a driving shaft of a rotation driving unit, in order to prevent damage to the rotation drive even when the supply amount of the liquid always fluctuates in macro or micro perspective.

### The means for solving the problem is provided

The above-mentioned purpose of the present invention is achieved by the following configurations.
(1) A fine mist generator comprising:
   a rotating body formed by a recessed portion having a spherical portion substantially uniform in a circumferential direction of the rotating body and supplied with liquid therein, and a central axis of the spherical portion and a rotating axis of the rotating body are disposed to be matched; and
   a rotation driving unit in which the rotating axis of the rotating body and a driving shaft of the rotation driving unit are disposed to be matched, and the rotation driving unit rotationally drives the rotating body,
   wherein in at least a portion of an outer peripheral surface of the rotating body, an inclined surface inclined toward an opening direction of the recessed portion as it goes radially outward is substantially uniformly formed in the circumferential direction of the rotating body,
   at the inclined surface, each of a plurality of first magnetic bodies is disposed with a substantially equal interval in the circumferential direction of the rotating body so that separation distances from the rotating axis of the rotating body to each of the first magnetic bodies in the radial direction are substantially the same,
   a plurality of second magnetic bodies having the same polarity as the first magnetic bodies are disposed with a substantially equal interval in a rotating direction of the rotating body, and the second magnetic bodies are disposed to face each of the first magnetic bodies respectively, so that magnetic force of the second magnetic bodies can act on the first magnetic bodies when the rotating body is rotationally driven by the rotation driving unit and the second magnetic bodies approach the first magnetic bodies.
(2) A fine mist generator comprising:
   a rotating body formed by a recessed portion having a spherical portion substantially uniform in a circumferential direction of the rotating body and supplied with liquid therein, and a central axis of the spherical portion and a rotating axis of the rotating body are disposed to be matched; and
   a rotation driving unit in which the rotating axis of the rotating body and a driving shaft of the rotation driving unit are disposed to be matched, and the rotation driving unit rotationally drives the rotating body,
   wherein in at least a portion of an outer peripheral surface of the rotating body, an inclined surface inclined toward an opening direction of the recessed portion as it goes radially outward is substantially uniformly formed in the circumferential direction of the rotating body,
   at the inclined surface, a first magnetic body is disposed in a belt shape in the circumferential direction of the rotating body so that separation distances from the rotating axis of the rotating body to the first magnetic body in the radial direction are substantially the same,
   a plurality of second magnetic bodies having the same polarity as the first magnetic body are disposed with a substantially equal interval in a rotating direction of the rotating body, and the second magnetic bodies are disposed to face the first magnetic body respectively, so that magnetic force of the second magnetic bodies can act on the first magnetic body.
(3) The fine mist generator according to (1) or (2), wherein the first magnetic body and the second magnetic body are disposed such that a magnetic force surface of the first magnetic body and a magnetic force surface of the second magnetic bodies are substantially parallel when the rotating body is rotationally driven by the rotation driving unit and the first magnetic body and each of the second magnetic bodies is closest to each other.
(4) The fine mist generator according to (1) or (2), wherein the inclined surface is formed with a convex curved surface.
(5) The fine mist generator according to (1) or (2), wherein the recessed portion has a flat surface at its bottom portion,
   the spherical portion is formed in an annular shape and connected to the peripheral edge of the flat surface at its inner edge.
(6) The fine mist generator according to (1), wherein the number of the first magnetic bodies is a natural number multiple of the number of the second magnetic bodies.
(7) The fine mist generator according to (1), wherein the number of the second magnetic bodies is a natural number multiple of the number of the first magnetic bodies.
(8) The fine mist generator according to (1) or (2), wherein the liquid is seawater.

According to the configuration of (1), the rotating body is supported by the rotation driving unit at the center position thereof, and is supported in a well-balanced manner at a plurality of locations by the magnetic force of the first magnetic bodies and the second magnetic bodies at the position of the outside in the radial direction. According to such structure, even when the rotating body is rotated at a high speed, the shaft vibration of the rotating axis of the rotating body can be suppressed, and then the diameter of the rotating body can be increased. Therefore, the large capacity of the fine mist can be achieved, and as a result, both the durability and the generation efficiency of the device (the fine mist generator) can be increased. Further, since the structure is formed by preparing the first magnetic bodies and the second magnetic bodies and disposed them to be adjacent, the structure is not complicated and simple. In addition, even when the supply amount of the liquid fluctuates in a macro or micro manner with time, it is possible to stably support the driving shaft of the rotation driving unit and prevent damage to the rotation drive.

According to the configuration of (2), the rotating body is supported by the rotation driving unit at the center position thereof, and is supported in a well-balanced manner at a plurality of locations by the magnetic force of the first magnetic bodies and the second magnetic bodies at the position of the outside in the radial direction. According to such structure, even when the rotating body is rotated at a high speed, the shaft vibration of the rotating axis of the rotating body can be suppressed, and then the diameter of the rotating body can be increased. Therefore, the large capacity of the fine mist can be achieved, and as a result, both the durability and the generation efficiency of the device can be increased. Further, since the structure is formed by preparing the first magnetic bodies and the second magnetic bodies and disposed them to be adjacent, the structure is not complicated and simple. In addition, even when the supply amount of the liquid fluctuates in a macro or micro manner with time, it is possible to stably support the driving shaft of the rotation driving unit and prevent damage to the rotation drive. Further, in this case, at the inclined surface, the first magnetic bodies are disposed in a belt shape in the circumferential direction of the rotating body so that the separation distances from the rotating axis of the rotating body to the first magnetic bodies in the radial direction are substantially the same. Therefore, since the magnetic force is always generated between the first magnetic bodies and the second magnetic bodies during high-speed rotation, the rotating body can be further stably supported.

According to the configuration of (3), the first magnetic bodies and the second magnetic bodies are disposed such that a magnetic force surface of the first magnetic bodies and a magnetic force surface of the second magnetic bodies are substantially parallel. Therefore, it is possible to support the rotating body that rotates firmly with high speed by the magnetic force.

According to the configuration of the (4), the direction in which the magnetic force of the first magnetic bodies and the second magnetic bodies acts is arranged so as to be closer to the horizontal direction due to the shape of the outer peripheral surface, and the rotating body can be supported more stably even during high-speed rotation.

According to the configuration of the (5), the liquid is first supplied to the recessed portion of the rotating body is in contact with the planar portion of the recessed portion, and the liquid spreads in the thin film state outward in the radial direction by the centrifugal force of the rotating body at that moment. In addition, the liquid moves while rises along the spherical portion of the recessed portion and outward in the radial direction, and at that time, expands outward in the radial direction while receiving the mechanical resistance. As a result, when the seawater is separated from the outer edge of the rotating body, it can be radially scattered radially outward in a finer state.

According to the configuration of the (6), it is possible to further improve the balance of the support in the radial direction with respect to the rotating body and stably support the rotating body even in the case of high-speed rotation.

According to the configuration of (7), the number of the second magnetic bodies is larger than the number of the first magnetic bodies, and the balance of the support in the radial direction can be further improved. Therefore, while ensuring the stability of the rotation of the rotating body, the weight of the rotating body is reduced, inertia during rotation is reduced, and further high-speed rotation can be accomplished.

According to the configuration of (8), a natural salt is produced by scattering seawater to all directions in a fine mist state using the fine mist generator of the present invention. Since the natural salt is obtained by evaporating only moisture out of the components of seawater, the natural salt abundantly contains minerals.

### Effect of the Invention

According to the present invention, it is possible to increase both the durability and generation efficiency of the device by increasing the rotational speed of the rotating body and the diameter of the disk shape to achieve large capacity of the fine mist while having a simple structure. Also, it is possible to stably support the driving shaft of the rotation driving unit, in order to prevent damage to the rotation drive even when the supply amount of the liquid always fluctuates in macro or micro perspective.

The present invention has been briefly described above. Further, the details of the present invention will be further clarified by reading the configuration (hereinafter referred to as "embodiment") for implementing the invention described below with reference to the accompanying drawings.

### BRIEF DESCRIPTION OF THE DRAWINGS

FIG. 1 is a front cross-sectional view illustrating one example of a structure of a fine mist generator according to the first embodiment of the present invention;
FIG. 2 is an enlarged view of a main part illustrating one example of a structure and a mounting position of the first magnet and the second magnet shown in FIG. 1;
FIG. 3 is a schematic plan view illustrating one example of the mounting positions of the first magnets shown in FIG. 2;
FIG. 4 is a schematic plan view illustrating one example of the mounting positions of the second magnets shown in FIG. 2;
FIG. 5 is a front cross-sectional view illustrating one example of a state in which a natural salt is produced using the fine mist generator shown in FIG. 1;
FIG. 6 is a schematic plan view illustrating one example of a structure of a first modified example according to the first embodiment;
FIG. 7 is a schematic plan view illustrating one example of a structure related to a first magnet according to a second modified embodiment according to the first embodiment;
FIG. 8 is a schematic plan view illustrating one example of a structure related to a second magnet according to a second modified embodiment according to the first embodiment;
FIG. 9 is a schematic plan view illustrating one example of a structure related to a second magnet according to a third modified embodiment according to the first embodiment.

### DETAILED DESCRIPTION OF THE PREFERRED EMBODIMENT

Hereinafter, embodiments in which the fine mist generator according to the present invention is specifically disclosed will be described in detail with reference to the accompanying drawings as appropriate.

However, detailed description may be omitted if not necessary. For example, detailed description of a well-known matter or the substantially same configuration may be omitted. This is to avoid unnecessary redundancy in the following description, and to facilitate understanding of a person skilled in the art. In addition, each of the attached drawings will be viewed in accordance with the orientation of the symbols.

In addition, the accompanying drawings and the following description are provided to sufficiently understand the disclosure by a person skilled in the art, and are not intended to limit the subject matter described in the claims.

For example, in the following embodiments, a case where seawater is adopted as a liquid to be fine mist will be described, but the present disclosure is not limited to such embodiment. The present invention can also be applied to various liquids. However, when an embodiment is applied to seawater, it is possible to produce a natural salt rich in mineral content.

### (Technical significance of the present invention)

A technical significance of the present invention will be described.

Although the plurality of embodiments according to the present invention will be described in detail below, according to the present invention, it is possible to increase both the durability and generation efficiency of the device by increasing the rotational speed of the rotating body and the diameter of the disk shape to achieve large capacity of the fine mist. Also, it is possible to stably support the driving shaft of the rotation driving unit, in order to prevent damage to the rotation drive even when the supply amount of the liquid always fluctuates in macro or micro perspective.

In particular, according to the present invention, it is possible to increase the diameter of the disk shape of the rotating body, for example, when the radius is twice, the area becomes four times, and the thickness of the liquid (for example, seawater) supplied during the rotation of the rotating body is 1/4 at the peripheral edge of the rotating body as a theoretical value.

Here, when the radius of the rotating body generally extends, the balance is easily collapsed in a direction intersecting the radial direction of the rotating body in proportion to the length of the radius. This influence increases moment, and excessive force acts on the component of the rotation driving unit of the rotating body (for example, the bearing), and the deterioration of the bearing may become severe and may lead to a failure.

In the present invention, it is possible to prevent the balance from collapsing even when the diameter of the rotating body is increased, and to stabilize the rotation even in high-speed rotation. As a result, for example, when the rotating body having a radius of 25 cm is increased to 2000 mm, if the fine mist efficiency of the liquid (vaporization efficiency in the case of seawater) is optimal at 250 mm, the 64 times of the liquid can be supplied when the radius is set to 200 cm, namely, the production efficiency is 64 times. As a result, for example, the force acting on the bearing is inhaled due to the increase in the diameter of the rotating body, and the generation efficiency is significantly improved.

In order to increase the generation efficiency, the fine mist generator according to the present invention has a special configuration, as in the embodiments described below.

### (First embodiment)

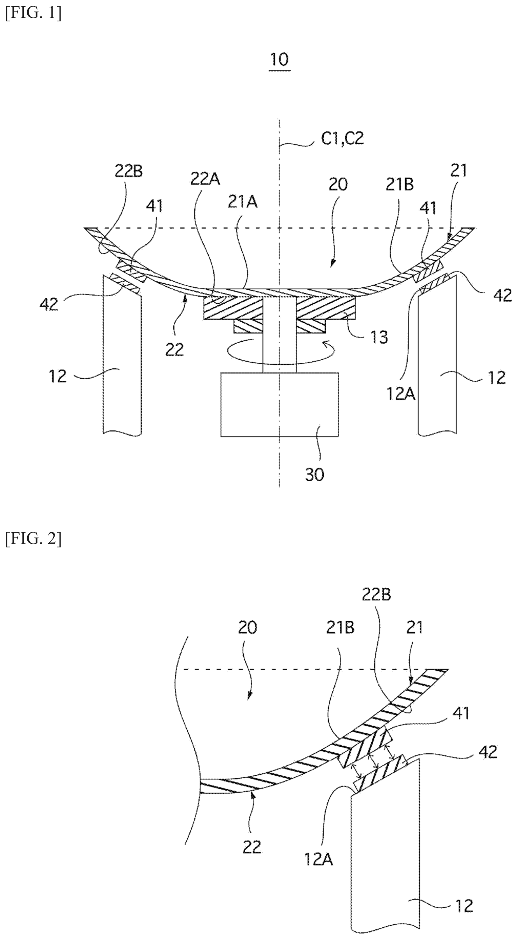

The first embodiment of the fine mist generator 10 according to the present invention will be described based on FIGS. 1-5.

### [General Summary of Fine mist Generator]

One example of an overall outline of the fine mist generator 10 will be described with reference to FIG. 1.

FIG. 1 is a front cross-sectional view illustrating one example of a structure of the fine mist generator 10 according to the present embodiment.

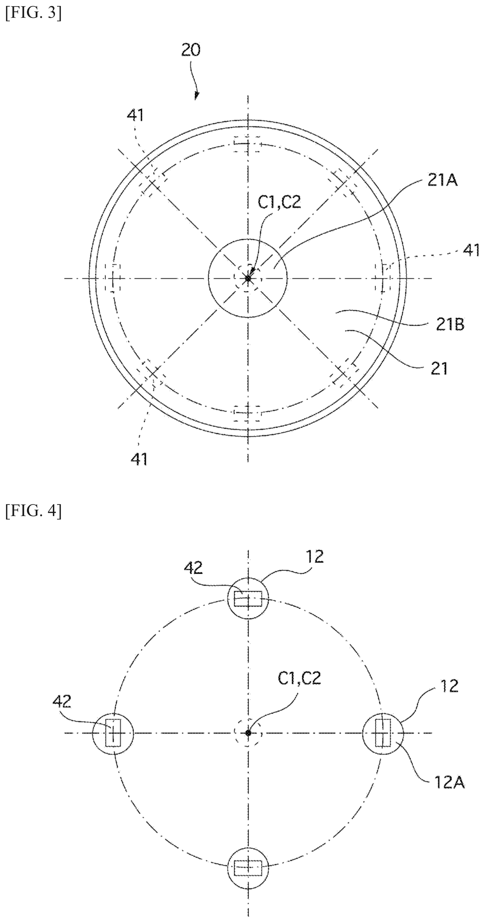

As shown in FIG. 1, the fine mist generator 10 according to the present embodiment includes a rotating body 20, a rotation driving unit 30, a water supply port 11 (see FIG. 4), a plurality of support rods 12, a plurality of first magnets 41 (one example of a first magnetic body), and a plurality of second magnets 42 (one example of a second magnetic body).

The rotating body 20 has a recessed portion 21 and is formed in a container shape. The rotating body 20 is made of a metal member such as stainless steel or titanium, and is molded by drawing, pressing, or the like, while the molding method is not limited, and various molding methods can be adopted.

Further, in the present embodiment, the radius of the rotating body 20 is set to about 150 mm, but is not limited thereto, and is configured to include the first magnet 41 and the second magnet 42 as will be described later, so that the size can be set larger than about 1500 mm.

The recessed portion 21 has a circular outer peripheral shape, and has a depth downward, and forms an inner peripheral surface of the rotating body 20. As a result, the recessed portion 21 defines a temporary accommodation space of the seawater SW (one example of the liquid) supplied from the water supply port 11.

Specifically, the recessed portion 21 includes a circular bottom portion 21A and an annular spherical portion 21B. The circular bottom portion 21A of the recessed portion 21 has a circular outer shape and a flat surface thereof, and is connected to the inner edge of the annular spherical portion 21B of the recessed portion 21 at its peripheral edge. The annular spherical portion 21B of the recessed portion 21 is formed to have a substantially uniform and gradual concave curved surface in the circumferential direction of the rotating body 20. The rotating body 20 is disposed such that the central axis of the annular spherical portion 21B of the recessed portion 21 matches with the driving shaft C2 (see the following paragraphs) of the rotation driving unit 30.

The outer peripheral surface 22 of the rotating body 20 corresponds to the recessed portion 21 (its inner peripheral surface) and is provided with a circular bottom portion 22A and an annular spherical portion 22B (one example of an inclined surface). Similarly, the circular bottom portion 22A of the outer peripheral surface 22 has a circular shape with a flat surface, and is connected to the inner edge of the annular spherical portion 22B of the outer peripheral surface 22 at the peripheral edge thereof. The annular spherical portion 22B of the outer peripheral surface 22 is formed to have a substantially uniform and gradual convex curved surface in the circumferential direction of the rotating body 20. Namely, the rotating body 20 is formed in a bowl shape having substantially the same thickness as viewed as a whole.

Further, the circular bottom portion 21A of the recessed portion 21, the annular spherical portion 21B of the recessed portion 21, the circular bottom portion 22A of the outer peripheral surface 22 and the annular spherical portion 22B of the outer peripheral surface 22 are disposed so that their central axes matches with each other.

Further, in the annular spherical portion 22B of the outer peripheral surface 22, in other words, in at least a portion of the outer peripheral surface 22 of the rotating body 20, the inclined surface inclined toward an opening direction of the recessed portion 21 as it goes radially outward is substantially uniformly formed in the circumferential direction of the rotating body 20.

The rotation driving unit 30 is composed of, for example, a motor, is disposed vertically below the rotating body 20, and the driving shaft C2 is connected to the rotating body 20 at the circular bottom portion 22A of the outer peripheral surface 22 thereof. As described above, the rotating body 20 is disposed such that the central axis of the annular spherical portion 21B of the recessed portion 21 matches with the driving shaft C2 (described later) of the rotation driving unit 30.

The driving shaft C2 of the rotation driving unit 30 is coupled to the rotating body 20 so as to match the central axis of the rotating body 20 (specifically, the recessed portion 21 of the rotating body 20 and the annular spherical portion 21B of the rotating body 20). The coupling of the rotating body 20 and the driving shaft C2 is reinforced by a reinforcing block 13 fixed in contact with the circular bottom portion 22A of the outer peripheral surface 22 of the rotating body 20 in the vertical direction below the rotating body 20, and is firmly fixed. By this reinforcement, the rotating body 20 is supported so as to be able to rotate stably with respect to the driving shaft C2 of the rotation driving unit 30.

In the fine mist generator 10 configured as stated above, the seawater SW supplied to the recessed portion 21 of the rotating body 20 comes into contact with the surface of the rotating body 20 rotated at a high speed by the rotation driving unit 30. Due to this contact, the seawater SW diffuses in the substantially horizontal direction along the surface of the circular bottom portion 21A and the annular spherical portion 21B of the recessed portion 21 by the action of the centrifugal force generated in the rotating body 20. During the diffusion, the seawater SW is formed in a thin film shape along the surface of the circular bottom portion 21A and the annular spherical portion 21B of the recessed portion 21. When the seawater SW is separated from the outer peripheral edge of the rotating body 20 by spreading in this thin film state, it becomes fine mist and is radially injected in all directions.

Each of the plurality of first magnets 41 (eight in the present embodiment) is attached to the annular spherical portion 22B of the outer peripheral surface 22. Each of the second magnets 42 is attached to each of the tips of the support rods 12.

The support rod 12 is a metal rod-shaped member, and a plurality of (four in the present embodiment) support rods 12 are arranged with a substantially equal interval along the rotating direction of the rotating body 20 (see FIG. 4). Then, in each of the support rods 12, its base end portion is fixed to, for example, at a predetermined placement surface (a setting surface or a floor: not shown) of the device, and the tip of the support rod 12 is disposed with an inclined flat surface 12A. The inclined flat surface 12A is formed such that the flat surface thereof faces the annular spherical portion 22B of the outer peripheral surface 22 described above, in other words, the flat surface thereof corresponds to (substantially parallel) to the annular spherical portion 22B of the outer peripheral surface 22 described above.

The plurality of support rods 12 and the rotation driving unit 30 are mechanically coupled to each other via the placement surface, and are relatively firmly fixed.

### [The mounting position of the first magnet and the second magnet]

One example of the mounting positions of the first magnets 41 and the second magnets 42 will be described with reference to FIGS. 2 to 4.

FIG. 2 is an enlarged view of a main part illustrating one example of a structure and the mounting position of the first magnet 41 and the second magnet 42 shown in FIG. 1.

FIG. 3 is a schematic plan view illustrating one example of the mounting positions of the first magnets 41 illustrated in FIG. 2.

FIG. 4 is a schematic plan view illustrating one example of the mounting positions of the second magnets 42 illustrated in FIG. 2.

As shown in FIGS. 2 to 4, the first magnets 41 and the second magnets 42 are permanent magnets formed in a rectangular shape, and are provided such that the polarities are identical to each other. For example, when the first magnet 41 is N pole, the second magnet 42 is set to N pole, and when the first magnet 41 is S pole, the second magnet 42 is set to S pole. The polarity setting is optional as long as the magnetic forces of the first magnet 41 and the second magnet 42 are repulsive to each other.

A plurality of first magnets 41 (eight in the present embodiment) are provided. at the annular spherical portion 22B of the outer peripheral surface 22 of the rotating body 20, each of the plurality of first magnets 41 is disposed with a substantially equal interval in the circumferential direction of the rotating body so that separation distances from the rotating axis C1 of the rotating body 20 to each of the first magnets 41 in the radial direction are substantially the same.

As described above, the second magnets 42 are attached one by one to each of the inclined flat surfaces 12A at the tips of the plurality of support rods 12. Namely, in accordance with the number of support rods 12, four second magnets 42 are arranged in the present embodiment, and the arrangement thereof is also disposed with a substantially equal interval in the rotating direction of the rotating body 20. Namely, in the present embodiment, the number of the first magnets 41 is set to a natural number multiple of the number of the second magnets 42 (twice in the present embodiment).

In the present embodiment, the number of the first magnets 41 is twice the number of the second magnets 42, but is not limited thereto, and the number of the first magnets 41 can be 3, 4, and 5 times, which means that the magnification is an arbitrary natural number.

Then, the second magnets 42 are disposed to face each of the first magnets 41 respectively, so that the magnetic force of the second magnets 42 can act on the first magnets 41 when the rotating body 20 is rotationally driven by the rotation driving unit 30 and the second magnets 42 approaches the first magnet 41 (see FIG. 2).

Then, the first magnets 41 and the second magnets 42 are disposed such that the magnetic force surface of the first magnets 41 and the magnetic force surface of the second magnets 42 are substantially parallel when the rotating body 20 is rotationally driven by the rotation driving unit 30 and each of the first magnetic bodies and the second magnetic bodies is closest to each other.

### [Regarding the method for using the fine mist generator]

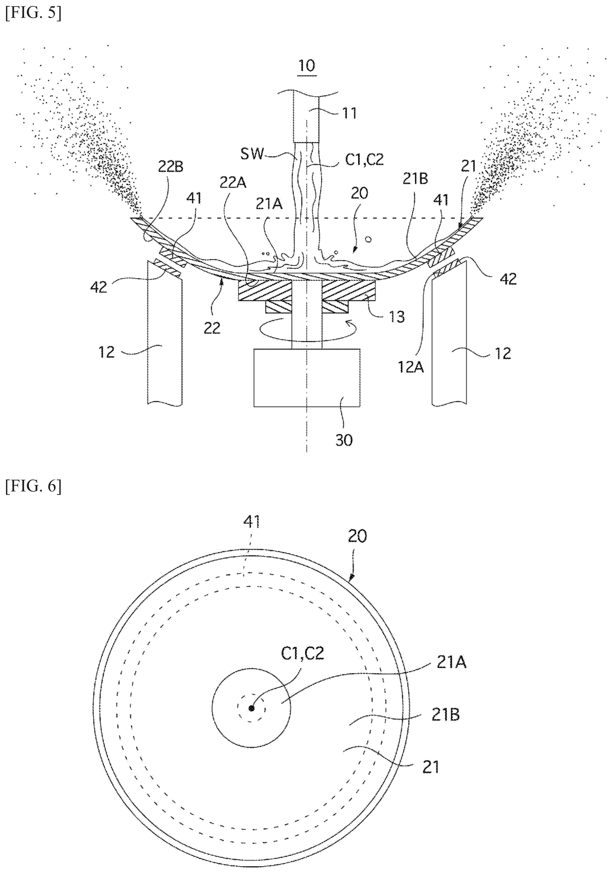

The method of using the fine mist generator 10 described above will be described with reference to FIG. 5.

FIG. 5 is a front cross-sectional view illustrating one example of producing a natural salt using the fine mist generator 10 shown in FIG. 1.

As shown in FIG. 5, the rotating body 20 is rotated at a high speed by the rotation driving unit 30. The rotational speed is set in a range of, for example, 5,000 RPM to 15,000 RPM. In such high-speed rotation state, the seawater SW (one example of the liquid) is supplied from the water supply port 11 toward the center of the rotating body 20. By this supply, the seawater SW supplied to the center of the rotating body 20 is in contact with the circular bottom portion 21A of the recessed portion 21. By this contact, by the centrifugal force of the rotating body 20, the seawater SW became a thin film is diffused outward in the radial direction at the circular bottom portion 21A of the recessed portion 21 of the rotating body 20.

Further, the seawater SW diffuses while rises radially outward along the annular spherical portion 21B of the recessed portion 21. All of it is inclined positively (upward in the vertical direction) in the rising direction, resulting in mechanical resistance.

Therefore, by the centrifugal force and the positive inclination described above, the seawater SW further becomes a thin film while diffusing in the radial direction, and finally the seawater SW is scattered as fine mist at the moment when the seawater SW jumps out from the rotating body 20. By the centrifugal force generated by the high-speed rotation of the rotating body 20, the fine mist of the scattered seawater SW is emitted in all directions and scattered far away. At this time, it is possible to efficiently and instantaneously evaporate only moisture to produce a natural salt rich in minerals.

### [Features and advantages of the present embodiment]

As described above, the fine mist generator 10 according to the present embodiment includes: a rotating body 20 formed by a recessed portion 21 having a annular spherical portion 21B substantially uniform in a circumferential direction of the rotating body 20 and supplied with seawater SW (one example of liquid) therein, and a central axis of the annular spherical portion 21B and a rotating axis C1 of the rotating body 20 are disposed to be matched; and a rotation driving unit 30 in which the rotating axis C1 of the rotating body 20 and a driving shaft C2 of the rotation driving unit 30 are disposed to be matched, and the rotation driving unit 30 rotationally drives the rotating body 20. At least a portion of an outer peripheral surface 22 of the rotating body 20, an inclined annular spherical portion 22B of the outer peripheral surface 22 (one example of an inclined surface) inclined toward an opening direction of the recessed portion 21 as it goes radially outward is substantially uniformly formed in the circumferential direction of the rotating body 20. At the annular spherical portion 22B of the outer peripheral surface 22, each of the plurality of first magnets 41(one example of the first magnetic bodies) is disposed with a substantially equal interval in the circumferential direction of the rotating body so that separation distances from the rotating axis C1 of the rotating body 20 to each of the first magnets 41 in the radial direction are substantially the same. The plurality of second magnets 42 (second magnetic bodies) having the same polarity as the first magnets 41 are disposed with a substantially equal interval in a rotating direction of the rotating body 20, and the second magnets 42 are disposed to face each of the first magnets 41 respectively, so that magnetic force of the second magnets 42 can act on the first magnets 41 when the rotating body 20 is rotationally driven by the rotation driving unit 30 and the second magnets 42 approach the first magnets 41.

Therefore, the rotating body 20 is supported by the rotation driving unit 30 at the center position thereof, and is supported in a well-balanced manner at a plurality of locations by the magnetic force of the first magnets 41 (one example of the first magnetic bodies) and the second magnets 42 (one example of the second magnetic bodies) at the position of the outside in the radial direction. According to such structure, even when the rotating body 20 is rotated at a high speed, the shaft vibration of the rotating axis C1 of the rotating body 20 can be suppressed, and then the diameter of the rotating body 20 can be increased. Therefore, the large capacity of the fine mist can be achieved, and as a result, both the durability and the generation efficiency of the device can be increased. Further, since the structure is formed by preparing the first magnets 41 and the second magnets 42 and disposed them to be adjacent, the structure is not complicated and simple. In addition, even when the supply amount of the seawater (one example of the liquid) fluctuates in a macro or micro manner with time, it is possible to stably support the driving shaft C2 of the rotation driving unit 30 and prevent damage to the rotation drive.

According to the fine mist generator 10 of the present embodiment, the first magnets 41 and the second magnets 42 are disposed such that the magnetic force surface of the first magnets 41 (one example of the first magnetic bodies) and the magnetic force surface of the second magnets 42 (one example of the second magnetic bodies) are substantially parallel to each other.

Therefore, it is possible to support the rotating body 20 that rotates at high speed with better balance by the magnetic force.

Further, according to the fine mist generator 10 of the present embodiment, the annular spherical portion 22B (one example of the inclined surface) of the outer peripheral surface 22 of the rotating body 20 is formed with a convex curved surface.

Therefore, by the shape of the outer peripheral surface 22, the direction in which the magnetic force of the first magnet 41 (one example of the first magnetic bodies) and the second magnet 42 (an example of the second magnetic bodies) act on can be arranged closer to the horizontal direction. As a result, the rotating body 20 can be supported more stably even during high-speed rotation.

Further, according to the fine mist generator 10 of the present embodiment, the recessed portion 21 has a circular bottom portion 21A (one example of the planar portion) at its bottom, and the annular spherical portion 21B (one example of the spherical portion) is formed in an annular shape and is connected to the peripheral edge of the circular bottom portion 21A at its inner edge.

In this case, the seawater SW (one example of the liquid) supplied to the recessed portion 21 of the rotating body 20 comes into contact with the circular bottom portion 21A (one example of the planar portion) of the recessed portion 21, and the seawater SW spreads in the thin film state outward in the radial direction by the centrifugal force of the rotating body 20 at the moment. Further, the seawater SW moves while rises along the annular spherical portion 21B (one example of the spherical portion) of the recessed portion 21 and outward in the radial direction, and at that time, expands outward in the radial direction while receiving the mechanical resistance. As a result, when the seawater SW is separated from the outer edge of the rotating body 20, it can be radially scattered radially outward in a finer state.

Further, according to the fine mist generator 10 of the present embodiment, the number of the first magnets 41 (one example of the first magnetic bodies: 8 in the present embodiment) is a natural number multiple of the number of the second magnets 42 (one example of the second magnetic bodies: 4 in the present embodiment).

Therefore, the rotating body 20 can be stably supported even in the case of high-speed rotation by further improving the balance of support in the radial direction with respect to the rotating body 20.

In addition, according to the fine mist generator 10 of the present embodiment, the liquid supplied to the rotating body 20 is the seawater SW. Using the fine mist generator 10 of the present embodiment, the seawater SW (one example of the liquid) is scattered in all directions in a fine mist state to produce a natural salt. Since the natural salt has evaporated only moisture out from the components of the seawater SW, the natural salt abundantly contains minerals.

### [A first modified embodiment according to the present embodiment]

A first modified embodiment according to the present embodiment introduced above will be described with reference to FIG. 6.

FIG. 6 is a schematic plan view illustrating one example of the structure of the first modified example according to the present embodiment.

As illustrated in FIG. 6, in the present modified embodiment, unlike the above-described embodiment, the first magnet 41 is not disposed in multiple units, and the first magnet 41 is formed in a belt-like (belt shape) in which the ends thereof are connected to each other. Namely, regarding the first magnet 41 of the present modified embodiment, at the annular spherical portion 22B (one example of the inclined surface) of the outer peripheral surface 22, the first magnet 41 are disposed in a belt shape in the circumferential direction of the rotating body 20 so that the separation distances from the rotation axis C1 of the rotating body 20 in the radial direction are substantially the same, namely, the first magnet 41 is disposed in an annular shape uniformly.

Namely, in this case, at the annular spherical portion 22B (one example of the inclined surface) of the outer peripheral surface 22, the first magnet 41 (one example of the first magnetic body) is disposed in a belt shape in the circumferential direction of the rotating body 20 so that the separation distances from the rotating axis C1 of the rotating body 20 in the radial direction are substantially the same.

Therefore, since the magnetic force is constantly generated between the first magnet 41 (one example of the first magnetic bodies) and the second magnets 42 (one example of the second magnetic bodies) during high-speed rotation, the rotating body 20 can be further stably supported.

### [A second modified embodiment of the present embodiment]

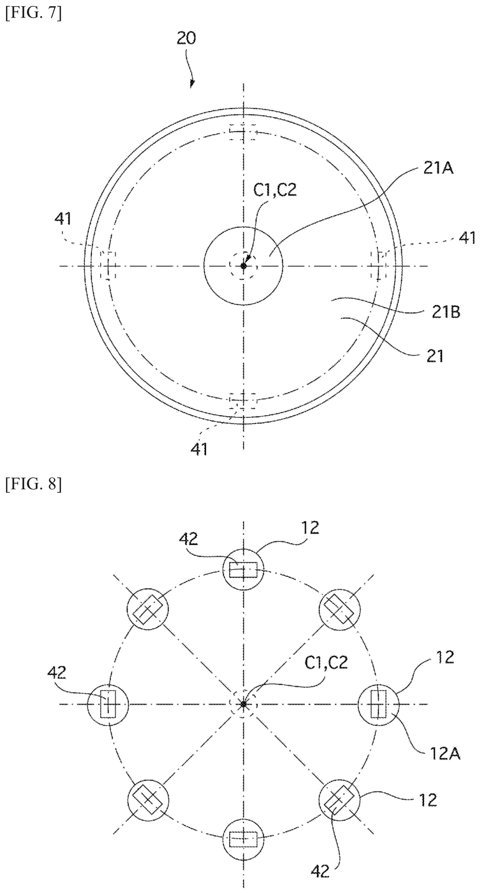

A second modified embodiment according to the present embodiment introduced above will be described with reference to FIGS. 7 and 8.

FIG. 7 is a schematic plan view illustrating one example of a structure of the first magnets 41 according to the second modified embodiment according to the present embodiment.

FIG. 8 is a schematic plan view illustrating one example of a structure of the second magnets 42 according to the second modified embodiment according to the present embodiment.

As shown in FIG. 7, in the present modified embodiment, the first magnet 41 is four. Each of the four first magnets 41 is substantially the same in the radial direction from the rotation axis C1 of the rotating body 20 in the annular spherical portion 22B of the outer peripheral surface 22 of the rotating body 20, and is disposed with a substantially equal interval in the circumferential direction of the rotating body 20.

As shown in FIG. 8, the number of the support rods 12 is eight, and they are arranged with a substantially equal interval along the rotation direction of the rotating body 20. Then, regarding each of the support rods 12, the second magnet 42 is attached to the inclined flat surface 12A. Namely, in accordance with the number of support rods 12, eight second magnets 42 are arranged in this modified embodiment, and the arrangement thereof is also disposed with a substantially equal interval in the rotation direction of the rotating body 20. Namely, in the present embodiment, the number of the second magnets 42 is set to be multiple of the natural number of the first magnets 41 (two times in the present modified embodiment).

In the present embodiment, the number of the second magnets 42 is twice the number of the first magnets 41, but is not limited thereto, and the number of the second magnets 42 can be 3, 4, and 5 times, which means that the magnification is an arbitrary natural number.

In the case of the present modified embodiment, the number of the first magnets 41 disposed on the rotating body 20 can be reduced by increasing the number of the second magnets 42. In other words, the number of the second magnets 42 (one example of the second magnetic bodies) is larger than the number of the first magnets 41 (one example of the first magnetic bodies), and the balance of the support in the radial direction can be further improved. Therefore, while ensuring the stability of the rotation of the rotating body 20, the weight of the rotating body 20 is reduced, inertia during rotation is reduced, and further high-speed rotation can be realized.

In addition, when the weight of the second magnets 42 on the support rod 12 directly disposed on the placement surface is heavy, it is easy to attach the second magnets 42 even if there is a large number thereof. On the other hand, the first magnets 41 disposed on the rotating body 20 may adversely affect the efficiency of the rotation itself of the rotating body 20 when they are too heavy. Namely, in order to increase the generation efficiency and the rotation efficiency while maintaining the repulsive force of the first magnets 41 and the second magnets 42, it is preferable that the first magnets 41 of the rotating body 20 is lightweight and the support rods 12 are heavier if the repulsive magnetic force is similar.

### [A third modified embodiment of the present embodiment]

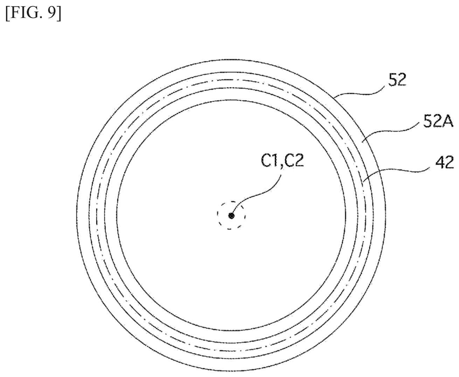

A third modified embodiment according to the present embodiment introduced above will be described with reference to FIG. 9.

FIG. 9 is a schematic plan view illustrating one example of a structure related to the second magnets 42 according to the third modified embodiment according to the present embodiment.

As shown in FIG. 9, in the present modified embodiment, unlike the aboveintroduced embodiment and the modified embodiment, the second magnet 42 is not disposed in multiple units, and the second magnet 42 is formed in the belt-like shape (belt shape) in which the ends thereof are connected to each other.

Therefore, in the present modified embodiment, a plurality of support rods 12 to which the second magnet 42 is attached are not provided in multiple units, and one cylindrical support portion is disposed to support the annular second magnet 42. The support portion is arranged concentrically with the rotation driving unit 30, and surrounds the rotation driving unit 30 by its center portion.

Further, the base end portion of the support portion is fixed to the placement surface, and an inclined tapered surface is formed on the tip surface of the support portion. The inclined tapered surface is formed to expand in diameter toward the tip. The annular second magnet 42 described above is attached to the inclined tapered surface.

In the case of the present modified embodiment, the number of first magnets disposed on the rotating body can be reduced by forming the second magnets in a belt shape (in a belt shape). Therefore, while ensuring the stability of the rotation of the rotating body, the weight of the rotating body is reduced, inertia during rotation is reduced, and further high-speed rotation can be realized.

Although the description of the specific embodiment is completed, the embodiments of the present invention are not limited to these embodiments, and can be modified, improved, etc. as appropriate.

In the first embodiment, the first magnetic bodies and the second magnetic bodies are provided as permanent magnets, but are not limited thereto. For example, as long as having magnetic force, a portion of a predetermined metal body may be magnetized.

### Industrial availability

The present invention is useful as a fine mist generator capable of increasing the speed of rotation of a rotating body and increasing the diameter of a disk shape and increasing the capacity of the fine mist while having a simple structure, and improving both durability and production efficiency of the device. In addition, the present invention is useful as a fine mist generator that can stably support the driving shaft of the rotation driving unit and prevent damage to the rotation drive even when the supply amount of the liquid fluctuates in a macro or micro perspective.

### DESCRIPTION OF SYMBOLS

10: Fine mist generator
11: water supply port
12: support rod
12A: inclined flat surface
13: reinforcing block
20: rotating body
21: recessed portion
21A: circular bottom portion (flat surface)
21B: Annular spherical portion (spherical surface portion)
22: outer peripheral surface
22A: circular bottom portion
22B: annular spherical surface
30: rotation driving unit
41: first magnet (first magnetic body)
42: second magnet (second magnetic body)
52: support portion
52A: inclined tapered surface
C1: rotating axis
C2: driving shaft
SW: seawater

## Claims

1. A fine mist generator comprising:
a rotating body formed by a recessed portion having a spherical portion substantially uniform in a circumferential direction of the rotating body and supplied with liquid therein, and a central axis of the spherical portion and a rotating axis of the rotating body are disposed to be matched; and
a rotation driving unit in which the rotating axis of the rotating body and a driving shaft of the rotation driving unit are disposed to be matched, and the rotation driving unit rotationally drives the rotating body,
wherein in at least a portion of an outer peripheral surface of the rotating body, an inclined surface inclined toward an opening direction of the recessed portion as it goes radially outward is substantially uniformly formed in the circumferential direction of the rotating body,
at the inclined surface, each of a plurality of first magnetic bodies is disposed with a substantially equal interval in the circumferential direction of the rotating body so that separation distances from the rotating axis of the rotating body to each of the first magnetic bodies in the radial direction are substantially the same,
a plurality of second magnetic bodies having the same polarity as the first magnetic bodies are disposed with a substantially equal interval in a rotating direction of the rotating body, and the second magnetic bodies are disposed to face each of the first magnetic bodies respectively, so that magnetic force of the second magnetic bodies can act on the first magnetic bodies when the rotating body is rotationally driven by the rotation driving unit and the second magnetic bodies approach the first magnetic bodies.

2. A fine mist generator comprising:
a rotating body formed by a recessed portion having a spherical portion substantially uniform in a circumferential direction of the rotating body and supplied with liquid therein, and a central axis of the spherical portion and a rotating axis of the rotating body are disposed to be matched; and
a rotation driving unit in which the rotating axis of the rotating body and a driving shaft of the rotation driving unit are disposed to be matched, and the rotation driving unit rotationally drives the rotating body,
wherein in at least a portion of an outer peripheral surface of the rotating body, an inclined surface inclined toward an opening direction of the recessed portion as it goes radially outward is substantially uniformly formed in the circumferential direction of the rotating body,
at the inclined surface, a first magnetic body is disposed in a belt shape in the circumferential direction of the rotating body so that separation distances from the rotating axis of the rotating body to the first magnetic body in the radial direction are substantially the same,
a plurality of second magnetic bodies having the same polarity as the first magnetic body are disposed with a substantially equal interval in a rotating direction of the rotating body, and the second magnetic bodies are disposed to face the first magnetic body respectively, so that magnetic force of the second magnetic bodies can act on the first magnetic body.

3. The fine mist generator according to claim 1 or 2, wherein the first magnetic body and the second magnetic body are disposed such that a magnetic force surface of the first magnetic body and a magnetic force surface of the second magnetic body are substantially parallel when the rotating body is rotationally driven by the rotation driving unit and the first magnetic body and each of the second magnetic bodies is closest to each other.

4. The fine mist generator according to claim 1 or 2, wherein the inclined surface is formed with a convex curved surface.

5. The fine mist generator according to claim 1 or 2, wherein the recessed portion has a flat surface at its bottom portion,
the spherical portion is formed in an annular shape and connected to the peripheral edge of the flat surface at its inner edge.

6. The fine mist generator according to claim 1, wherein the number of the first magnetic bodies is a natural number multiple of the number of the second magnetic bodies.

7. The fine mist generator according to claim 1, wherein the number of the second magnetic bodies is a natural number multiple of the number of the first magnetic bodies.

8. The fine mist generator according to claim 1 or 2, wherein the liquid is seawater.
